# EUROPÄISCHE PATENTANMELDUNG

(11) **EP 2 377 802 A1**
(43) Veröffentlichungstag der Anmeldung: **19.10.2011**
(21) Anmeldenummer: 11075065.0
(22) Anmeldetag: 13.04.2011
(51) Int. Cl.: B66C 23/40, B66C 23/38, F02N 11/08

(54) **Kran mit Zusatzaggregat**

(30) Priorität: 15.04.2010 DE 102010015303; 01.06.2010 DE 102010022601
(71) Anmelder: Terex Demag GmbH, 66482 Zweibrücken (DE)
(72) Erfinder: Roth, Matthias, 66914 Waldmohr (DE); Klein, Ascan, 66894 Käshofen (DE); Wernicke, Frank, 66497 Stambach (DE); Jene, Thilo, 66583 Spiesen (DE); Mass, Stefan, 66557 Illingen (DE); Sacken, Christoph, 66482 Zweibrücken (DE)
(74) Vertreter: Meissner, Peter E.

(57) **Zusammenfassung**

Fahrzeugkran mit einem Antriebsmotor (6) für Straßen- und Geländefahrten ausgerüsteten Unterwagen (2) und einem mit Kranfunktion ausgelegten Oberwagen (1). Der Oberwagen (1) ist drehbar auf dem Unterwagen (2) gelagert und mit einem Kranausleger (5) und einer Krankabine (4) versehen. Der Antriebsmotor (6) dient als Fahrmotor des Unterwagens (2) und zum Betrieb der Kranfunktionen des Oberwagens (1) und sämtlicher Hilfsaggregate In dem Oberwagen (1) ist erfindungsgemäß ein Zusatzaggregat (10) zur Übernahme von Hilfsfunktionen im Unterwagen (2) und im Oberwagen (1) bei Stillstand des Antriebsmotors (6) vorgesehen.

## Beschreibung

Die vorliegende Erfindung betrifft einen Fahrzeugkran mit einem Antriebsmotor für Straßen- und Geländefahrten ausgerüsteten Unterwagen und einem mit Kranfunktion ausgelegten Oberwagen, der drehbar auf dem Unterwagen gelagert und mit einem Kranausleger und einer Krankabine versehen ist, wobei der Antriebsmotor als Fahrmotor des Unterwagens und zum Betrieb der Kranfunktionen des Oberwagens und sämtlicher Hilfsaggregate des Unterwagens und des Oberwagens dient.

Derartige Fahrzeugkrane sind allgemein bekannt und werden für den mobilen Einsatz für die unterschiedlichsten Einsatzgebiete verwendet. Mobile Fahrzeugkrane, wie Raupenkrane und Radkrane, bestehen üblicherweise aus einem, mit einem starken Antriebsmotor angetriebenen Kraftfahrzeugfahrgestell, dem sogenannten Unterwagen, auf dem ein dreh- und schwenkbarer Kran, ein sogenannter Oberwagen, montiert ist. Als Antriebmotor dient beispielsweise ein Verbrennungsmotor.

Der Fahrbetrieb des Unterwagens von einem Einsatzort zum anderen, beispielsweise auf Straßen und im Gelände, und der Kranbetrieb zum Heben und Verladen von Last mittels eines Kranauslegers, erfolgen mit dem Antriebsmotor. Der Antriebsmotor muss den jeweiligen Betriebsbedingungen entsprechende hohe Leistungsanforderungen erfüllen, und ist dem entsprechend leistungsstark dimensioniert. Durch diese leistungsstarke Dimensionierung ist sein Kraftstoff- und Wartungsbedarf entsprechend hoch.

Naturgemäß liegen zwischen Anforderungen bestimmter Kranfunktionen längere Stillstandzeiten, während denen der Antriebsmotor quasi im Leerlauf weiter läuft. Zur Einsparung von Kraftstoff während derartiger Leerlaufzeiten ist beispielsweise aus der US 7,500,535 B2 eine Start-Stop-Automatik bekannt, mit der der Antriebsmotor bei funktionsbedingten längere Stillstandzeiten ausschaltet und erst bei der nächsten Anforderung, beispielsweise einer Hebe-, Drehfunktion oder auch Rüstfunktionen, bei Raupenkranen auch der Fahrfunktion, neu gestartet werden kann. Der Kraftstoffverbrauch des leistungsstarken Antriebsmotors kann dadurch erheblich gesenkt werden.

Nachteilig dabei ist, dass mit Abschalten des Antriebsmotors auch sämtliche andere sicherheits- und komfortrelevanten Funktionen des Fahrzeugkrans außer Funktion gesetzt werden oder aus Fahrzeugbatterie gespeist, die sich dann schnell entladen kann und einen Motorneustart erfordert. Diese Funktionen werden zwar bei erneutem Starten des Antriebsmotors wieder aktiviert, zum Starten aber ist eine erhebliche Speicherkapazität der Batterie erforderlich. Durch häufiges An- und Abschalten des Antriebsmotors kann es zu einer erheblichen Belastung der elektrischen Batterie kommen, die bis zu deren Totalausfall durch Entladung führen kann.

Aufgabe der vorliegenden Erfindung ist es, Maßnahmen zu schaffen, bei denen die betriebsbereitschafts-, sicherheits- und komfortrelevanten Funktionen eines gattungsgemäßen Fahrzeugkrans bei abgeschaltetem Antriebsmotor erhalten bleiben.

Diese Aufgabe wird durch die in dem Patentanspruch 1 angegebenen Merkmale gelöst, insbesondere dadurch, dass ein Zusatzaggregat zur Übernahme sämtlicher Hilfsfunktionen im Unterwagen und im Oberwagen bei Stillstand des Antriebsmotors vorgesehen ist. Vorteilhafte Ausführungsformen der Erfindung sind Gegenstand der Unteransprüche.

Durch diese Maßnahmen wird ein Fahrzeugkran geschaffen, der sparsam im Verbrauch ist, bei dem die Lärmemission reduziert und der Wartungsaufwand und die Wartungskosten durch die Minderung der tatsächlichen Betriebsstunden vermindert wird.

Durch das autarke erfindungsgemäße Zusatzaggregat können die Stillstandzeiten des Antriebsmotors verlängert und auf seine tatsächlich benötigte Betriebszeit als Hauptantrieb als Arbeitsantrieb beschränkt werden. Während der Kranstillstandzeiten ist beispielsweise die Funktion der Hydraulikpumpe für den Kranantrieb nicht notwendig. Das Zusatzaggregat ist deutlich leistungsschwächer und somit verbrauchsgünstiger als der Antriebsmotor ausgelegt; auch läuft es deutlich leiser und weist eine geringere Schadstoffemission auf.

Beim Stoppen des Antriebsmotors steht weiterhin Energie für Beleuchtung, elektrische Steuerung, Klimaanlage, Heizung, Lüftung und Aufrechterhaltung der temperaturbedingten Betriebszustände, einschließlich der Heizung und die Temperierung des Antriebsmotors, zur Verfügung. Der Antriebsmotor wird als Hauptantrieb nur dann zugeschaltet, wenn tatsächlich eine Kran- oder Fahrleistung angefordert wird. Der Antriebsmotor bleibt länger in der Stop-Phase, wodurch der Kraftstoffverbrauch, die CO₂- und Lärmemission verringert wird und die Wartungsintervalle können verlängert werden.

Bei Straßenfahrten kann das Zusatzaggregat ausgeschaltet sein, da keine Kranfunktionen stattfinden. Zudem kann das Zusatzaggregat die Hilfsfunktionen auch permanent übernehmen.

In einer bevorzugten Ausführungsform des erfindungsgemäßen Fahrzeugkrans ist dem Zusatzaggregat ein Wärmetausscher zugeordnet, mit dessen Abwärme der Wärmebedarf sämtlicher Bedienelemente abdeckbar ist.

In einer vorteilhaften Ausführungsform des erfindungsgemäßen Fahrzeugkrans ist dem Zusatzaggregat ein Generator zur Stromerzeugung für sicherheits- und komfortrelevanter elektrische Verbraucher zugeordnet.

In einer weiteren bevorzugten Ausführungsform des erfindungsgemäßen Fahrzeugkrans ist bei Betrieb des Antriebsmotors das Zusatzaggregat abschaltbar.

Gemäß einer vorteilhaften Ausführungsform des erfindungsgemäßen Fahrzeugkrans treibt das Zusatzaggregat einen Klimakompressor zum Betrieb einer Klimaanlage an.

Gemäß einer weiteren vorteilhaften Ausführungsform des erfindungsgemäßen Fahrzeugkrans ist dem Antriebsmotor eine Start-Stop-Automatik zugeordnet.

In einer besonders bevorzugten Ausführungsform des erfindungsgemäßen Fahrzeugkrans ist mittels des Zusatzaggregates die Kühlwasser- und Öltemperatur des Antriebsmotors innerhalb vorgegebener Sollwerte haltbar.

In einer weiteren besonders vorteilhaften Ausführungsform des erfindungsgemäßen Fahrzeugkrans erfolgen, bei Stillstand des Antriebsmotors, die sicherheits- und komfortrelevante Funktionen durch das Zusatzaggregat.

Um zusätzlich Gewicht und Kraftstoff einsparen und zu dem die Lärm- und CO₂ Emissionen zu senken ist in einer weiteren vorteilhaften Ausführungsform des erfindungsgemäßen Fahrzeugkrans das Zusatzaggregat wesentlich verbrauchs- und leistungsgeringer ausgelegt als der Antriebsmotor.

In einer weiteren bevorzugten Ausführungsform des erfindungsgemäßen Fahrzeugkrans treibt das Zusatzaggregat eine Hydraulikpumpe an, um hierdurch Kranfunktionen mit geringer Geschwindigkeit ausführen zu können. Die Hydraulikpumpe ist in dieser Ausführungsform nicht die Hydraulikpumpe des Hauptantriebs, sondern ein dem erfindungsgemäßen Fahrzeugkran zusätzlich zugeordnetes Zusatzaggregat.

In einer weiteren besonders vorteilhaften Ausführungsform des erfindungsgemäßen Fahrzeugkrans ist das Zusatzaggregat für einen Notbetrieb bei kompletten oder teilweisen Ausfall des Antriebsmotors ausgelegt. Hierdurch kann ein Notbetrieb des Fahrzeugkrans sichergestellt werden. So können beispielsweise, die gesamte oder nur ausgesuchte Bereiche der Hydraulische Anlage, die für den Betrieb des Krans notwendig sind, im Bedarfsfall von dem Zusatzaggregat mit der notwendigen Energie beaufschlagt werden. Ein Totalausfall des Fahrzeugkrans während einer Einsatzsituation wird hierdurch verhindert. Das Zusatzaggregat fungiert so als Back-Up System zur Aufrechterhaltung der Einsatzbereitschaft des Fahrzeugkrans.

Gemäß einer weiteren besonders bevorzugten Ausführungsform des erfindungsgemäßen Fahrzeugkrans ist das Zusatzaggregat als mobile Einheit ausgebildet und im Bedarfsfall mit einem Fahrzeugkran verbindbar. Das Zusatzaggregat ist somit nicht Fahrzeuggebunden und kann, je nach Bedarfsfall dem einen oder anderen Fahrzeugkran zugeordnet werden. Dies hat zudem den Vorteil, dass lediglich am Fahrzeugkran entsprechende Schnittstellen vorgehalten werden müssen. Dies kann die Produktionskosten erheblich senken helfen.

In einer vorteilhaften Ausführungsform des erfindungsgemäßen Fahrzeugkrans sind das Zusatzaggregat und der Antriebsmotor miteinander koppelbar.

In einer weiteren besonders bevorzugten Ausführungsform des erfindungsgemäßen Fahrzeugkrans treibt das Zusatzaggregat eine Umwälzpumpe an, die bei ausgeschalteter Kranfunktion das Hydrauliköl durch einen, den Leitungen zugeordneten Kühler leitet. Hierdurch kann sichergestellt werden, dass die während der Kranfunktion in das Hydrauliköl eingeleitete Wärmeenergie, bei einer Wartezeit, in der keine Kranarbeiten ausgeführt werden und der Antriebsmotor abgeschaltet ist, über den Kühler abgeführt werden kann. Die Umwälzpumpe kann elektrisch angetrieben werden, um so das Hydrauliköl durch einen Kühler drücken.

Gemäß einer vorteilhaften Ausführungsform des erfindungsgemäßen Fahrzeugkrans erfolgt der Betrieb des Zusatzaggregats durch eine externe Energiequelle. Hierdurch ist es möglich das Zusatzaggregat besonders kompakt und einfach auszubilden.

Die externe Energiequelle ist, in einer besonders vorteilhaften Ausführungsform des erfindungsgemäßen Fahrzeugkrans, Strom aus einem Energieversorgungsnetz. Hierbei kann es sich um öffentliche oder private Energieversorgungsnetze / Stromnetze handeln.

In einer besonders bevorzugten Ausführungsform des erfindungsgemäßen Fahrzeugkrans lädt das Nebenaggregat einen Hydraulikspeicher zum Anlassen des Antriebsmotors mittels eines hydraulischen Anlassers auf.

Der hydraulische Anlasser zum Anlassen des Antriebsmotors wird, in einer weiteren bevorzugten Ausführungsform des erfindungsgemäßen Fahrzeugkrans, direkt von dem Nebenaggregat angetrieben.

Gemäß einer weiteren vorteilhaften Ausführungsform des erfindungsgemäßen Fahrzeugkrans treibt das Nebenaggregat eine Hydraulikpumpe an, die einen hydraulischen Anlasser zum Antreiben des Antriebsmotors antreibt.

In einer weiteren vorteilhaften Ausführungsform des erfindungsgemäßen Fahrzeugkrans übernimmt das Zusatzaggregat auch dann Funktionen, wenn der Antriebsmotor läuft. Dies ist besonders Vorteilhaft, da hierdurch einzelne Komponenten an Hauptantrieb und Nebenaggregat nicht doppelt verbaut werden müssen.

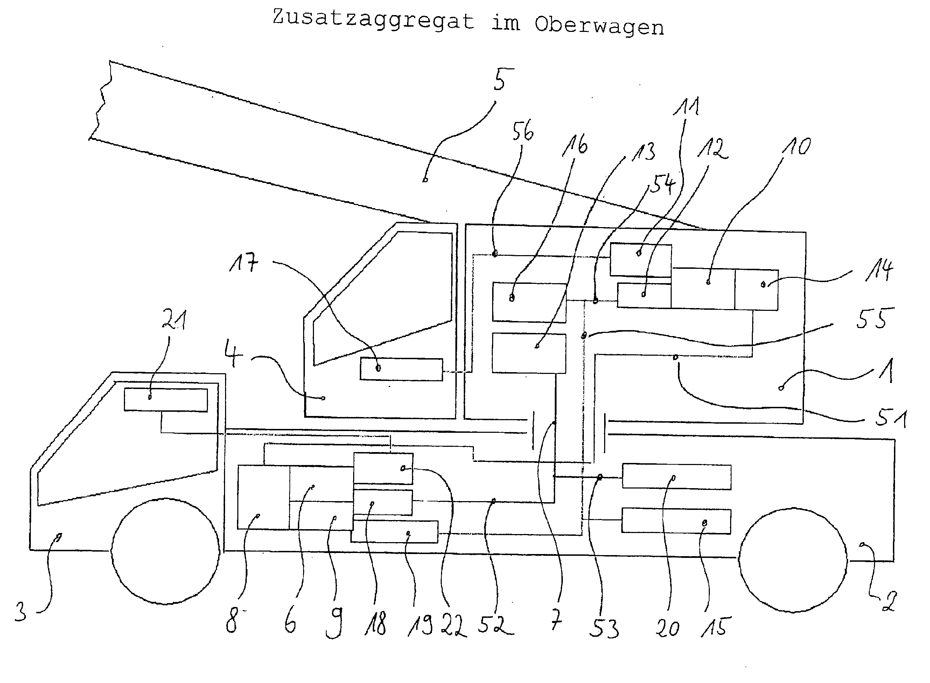

Die Erfindung wird im Folgenden anhand einer beispielhaften Ausführungsform unter Bezugnahme auf die beigefügte Zeichnung näher erläutert. Die beschriebene Ausführungsform umfasst auch solche Ausführungsformen, die sich beispielsweise auf Raupenkrane oder ähnliche mobile Fahrzeugkrane beziehen.

Die einzige Figur zeigt einen Fahrzeugkran, der auf einem Oberwagen 1 und einem Unterwagen 2 besteht. Der Unterwagen 2 ist in dieser Ausführungsform als ein LKW-Chassis mit einer Fahrerkabine 3 ausgebildet, auf das als Oberwagen ein drehbarer Kran angeordnet ist. Der mit dem Kran ausgebildete Oberwagen 1 weist eine separate Krankabine auf, von der aus der Kranausleger 5 bedient werden kann.

In dem Unterwagen 2 ist als Fahrantrieb für den Fahrzeugkran ein Antriebsmotor 6 angeordnet, mit dem über ein Getriebe 9 auch eine Hydraulikpumpe 18 angetrieben werden kann. Die Hydraulikpumpe 18 versorgt über Leitungen 52 und 53 einen Steuerblock 20 für den Unterwagen 2. Über eine Drehdurchführung 7 versorgt die Hydraulikpumpe 18 einen Steuerblock 13, der in dem Oberwagens 1 angeordnet ist.

Bei dem dargestellten Ausführungsbeispiel ist in dem Oberwagen 1 ein erfindungsgemäßes Zusatzaggregat 10 angeordnet, das mit einem Kühler 14 versehen ist. Der Kühler 14 ist über eine Leitung 51 mit einem Wärmetauscher 8 des Unterwagens 2 verbunden.

Mit dem Zusatzaggregat 10 kann beispielsweise ein Generator 12 angetrieben werden. Der Generator 12 speist eine Batterie 15, sowie über Leitungen 54 und 55 diverse elektrische Verbraucher 16. Ferner treibt das Zusatzaggregat 10 einen Klimakompressor 11, der über Leitungen 56 eine Klimaanlage 17 in der Krankabine 4 bedient.

Der Antriebsmotor 6 treibt über das Getriebe 9 bei Fahrbetrieb die Antriebsräder des Krans und gleichzeitig die Hydraulikpumpe 18 an. Die Hydraulikpumpe 18 versorgt über den Steuerblock 20 den Oberwagen 1 mit Drucköl. Der Oberwagen 1 übernimmt bei Straßen- oder Geländefahrt keine Funktion, und das Zusatzaggregat 10 kann ausgeschaltet sein.

Im Kranbetrieb betreibt der Antriebsmotor 6 die Hydraulikpumpe 18, die Drucköl durch die Leitung 52, die durch die Drehdurchführung 7 geführt ist, zu dem Steuerblock 13 führt. Der Steuerblock 13 steuert in Verbindung mit einer Elektronik in bekannter Weise die Kranbewegungen. Zusätzlich betreibt der Antriebsmotor 6 auch einen Generator 19, der die Batterie 15 lädt und elektrische Verbraucher bedient.

Das erfindungsgemäße Zusatzaggregat 10 treibt einen Generator 12 an, der bei Stillstand des Antriebsmotors 6 die Batterie 15 lädt und elektrische Verbraucher im Oberwagen 1 und in der Krankabine 4 versorgt, beispielsweise mit Beleuchtung. Weiterhin treibt das Zusatzaggregat 10 einen Klimakompressor 11, mit dem über eine Leitung 56 die Klimaanlage 17 in der Krankabine 4 betrieben werden kann.

Im täglichen Betrieb eines Montagekrans kommt es typischerweise zu längeren Phasen, in denen keine Kranleistung abgerufen wird. Dieser Zustand wird durch eine an sich bekannte Start-Stop-Automatik erkannt. Bei Eintreten bestimmter Betriebsbedingungen wird der Antriebsmotor 6 automatisch gestoppt. Diese Bedingungen können beispielsweise durch die Auslastung eines Lastmomentbegrenzers mit einem kleineren Schwellwert sein. Ebenso kann das Ausbleiben der Ansteuerung einer Kranbewegung oder eine Kühlwassertemperatur oder Öltemperatur innerhalb bestimmter Sollbereiche als Indikatoren dienen, ebenso wie die Batteriekapazität innerhalb eines vorgegebenen Toleranzbereiches.

Während der Stop-Phasen des Antriebsmotors 6 übernimmt das Zusatzaggregat 10 die Sicherheits- oder Komfortfunktionen, die auch dann zur Verfügung stehen müssen oder sollen, wenn keine Kranleistung abgefordert wird.

Solche Funktionen können beispielsweise der Betrieb der Klimaanlage 17 in der Krankabine 4 oder des Klimakompressors 22 zum Betrieb einer Klimaanlage 21 in der Fahrerkabine 3 sein. Ferner ist die Beleuchtung der Krankabine 4 oder des Kranumfeldes, Warnleuchten und Warnsignale, die Kransteuerung mit Display, ein Radio, Nebenverbraucher wie Funkgeräte, Mobilfunkladegeräte und so weiter stets betriebsbereit. Auch die Aufrechterhaltung der Batterieladung, die Temperierung des Antriebsmotors 6, beispielsweise über Kühlwasser, zur Vermeidung von Kaltstarts, ist über eine Leitung 51 möglich. Eine weitere Funktion ist, der elektrische Betrieb einer Umwälzpumpe - nicht dargestellt -, um den großen Energieeintrag in das Hydrauliköl während der Kranarbeit, bei längeren Wartezeiten über einen Ölkühler - nicht dargestellt - herunterkühlen zu können. Hydrauliköl auch bei Stillstand der Kranfunktion durch

Während der Straßenfahrt ist das Zusatzaggregat 10 üblicherweise ausgeschaltet und die Stromversorgung des Unterwagens 2 wird von dem Generator 19 gewährleistet. Während der Stop-Phasen des Antriebsmotors 6 stehen dem Kranbediener durch das Zusatzaggregat 10 bei deutlich reduziertem Kraftstoffverbrauch und deutlich reduzierter Lärmbelastung alle notwendigen Funktionen zur Verfügung. Zudem werden die kostenintensiven Wartungsintervalle des Antriebsmotors 6 verlängert.

Bei einer anderen Ausführung ist auch das Zusatzaggregat 10 mit einer Start-Stop-Automatik versehen und kann zur Unterstützung des Antriebmotors 6 mitlaufen. Es kann sowohl im Oberwagen 1 als auch im Unterwagen 2 angeordnet sein. Ebenso kann der Antriebsmotor 6 sowohl im Oberwagen 1 als auch im Unterwagen 2 angeordnet sein.

Bei einer weiteren Ausführungsform übernimmt das Zusatzaggregat 10 auch dann die Nebenfunktionen, wenn der Antriebsmotor 6 läuft. Dies hat den Vorteil, dass dann Komponenten an Hauptantrieb und Zusatzaggregat nicht doppelt verbaut werden müssten.

Des Weiteren kann der Betrieb des Zusatzaggregats 10 über Netzstrom oder andere externe Energiequellen erfolgen. Diese können sodann mit dem Zusatzaggregat 10 verbunden werden.

Auch ist die Möglichkeit des hydraulisch anlassen des Antriebsmotor 6 vorgesehen. Dies kann beispielsweise dadurch geschehen, dass ein Hydraulikspeicher - nicht dargestellt - durch den Betrieb des Zusatzaggregats 10 geladen wird, um dann zum Anlassen des Antriebsmotors 6 einen hydraulischen Anlasser - nicht dargestellt - zu betätigen.

### Bezugszeichen

- 1.: Oberwagen
- 2.: Unterwagen
- 3.: Fahrerkabine
- 4.: Krankabine
- 5.: Kranausleger
- 6.: Antriebsmotor/Fahrmotor
- 7.: Drehdurchführung
- 8.: Wärmetauscher/Kühler
- 9.: Getriebe
- 10.: Zusatzaggregat
- 11.: Klimakompressor
- 12.: Generator
- 13.: Steuerblock
- 14.: Kühler
- 15.: Batterie
- 16.: elektrische Verbraucher
- 17.: Klimaanlage
- 18.: Hydraulikpumpe
- 19.: Generator
- 20.: Steuerblock
- 21.: Klimaanlage
- 22.: Klimakompressor
- 51, 52, 53, 54, 55, 56: Leitungen

## Patentansprüche

1. Fahrzeugkran mit einem Antriebsmotor für Straßen- und Geländefahrten ausgerüsteten Unterwagen und einem mit Kranfunktion ausgelegten Oberwagen, der drehbar auf dem Unterwagen gelagert und mit einem Kranausleger und einer Krankabine versehen ist, wobei der Antriebsmotor als Fahrmotor des Unterwagens und zum Betrieb der Kranfunktionen des Oberwagens und sämtlicher Hilfsaggregate des Unterwagens und des Oberwagens dient, **dadurch gekennzeichnet, dass** ein Zusatzaggregat (10) zur Übernahme von Hilfsfunktionen im Unterwagen (2) und im Oberwagen (1) bei Stillstand des Antriebsmotors (6) vorgesehen ist.

2. Fahrzeugkran nach Anspruch 1, **dadurch gekennzeichnet, dass** dem Zusatzaggregat (10) ein Wärmetauscher (14) zugeordnet ist, mit dessen Abwärme der Wärmebedarf sämtlicher Bedienelemente abdeckbar ist.

3. Fahrzeugkran nach den Ansprüchen 1 und 2, **dadurch gekennzeichnet, dass** dem Zusatzaggregat (10) ein Generator (12) zur Stromerzeugung für sicherheits- und komfortrelevanter elektrische Verbraucher (11, 15, 16, 17) zugeordnet ist.

4. Fahrzeugkran nach einem oder mehreren der vorhergehenden Ansprüche, **dadurch gekennzeichnet, dass** das Zusatzaggregat (10) bei Betrieb des Antriebsmotors (6) abschaltbar ist.

5. Fahrzeugkran nach einem oder mehreren der vorhergehenden Ansprüche, **dadurch gekennzeichnet, dass** das Zusatzaggregat (10) einen Klimakompressor (11) zum Betrieb einer Klimaanlage (17) antreibt.

6. Fahrzeugkran nach einem oder mehreren der vorhergehenden Ansprüche, **dadurch gekennzeichnet, dass** dem Antriebsmotor (6) eine Start-Stop-Automatik zugeordnet ist.

7. Fahrzeugkran nach einem oder mehreren der vorhergehenden Ansprüche, **dadurch gekennzeichnet, dass** mittels des Zusatzaggregates (10) die Kühlwasser- und Öltemperatur des Antriebsmotors (6) innerhalb vorgegebener Sollwerte haltbar ist.

8. Fahrzeugkran nach einem oder mehreren der vorhergehenden Ansprüche, **dadurch gekennzeichnet, dass** bei Stillstand des Antriebsmotors (6) sicherheits- und komfortrelevante Funktionen durch das Zusatzaggregat (10) erfolgen.

9. Fahrzeugkran nach einem oder mehreren der vorhergehenden Ansprüche, **dadurch gekennzeichnet, dass** das Zusatzaggregat (10) wesentlich verbrauchs- und leistungsgeringer als der Antriebsmotor (6) ausgelegt ist.

10. Fahrzeugkran nach einem oder mehreren der vorhergehenden Ansprüche, **dadurch gekennzeichnet, dass** das Zusatzaggregat (10) eine Hydraulikpumpe (18) antreibt, um hierdurch Kranfunktionen mit geringer Geschwindigkeit auszuführen.

11. Fahrzeugkran nach Anspruch 10, **dadurch gekennzeichnet, dass** das Zusatzaggregat (10) für einen Notbetrieb bei komplettem oder teilweisem Ausfall des Antriebsmotors (6) ausgelegt ist.

12. Fahrzeugkran nach einem oder mehreren der vorhergehenden Ansprüche, **dadurch gekennzeichnet, dass** das Zusatzaggregat (10) als mobile Einheit ausgebildet und im Bedarfsfall mit dem Fahrzeugkran verbindbar ist.

13. Fahrzeugkran nach einem oder mehreren der vorhergehenden Ansprüche, **dadurch gekennzeichnet, dass** das Zusatzaggregat (10) und der Antriebsmotor (6) miteinander koppelbar sind.

14. Fahrzeugkran nach einem oder mehreren der vorhergehenden Ansprüche, **dadurch gekennzeichnet, dass** das Zusatzaggregat (10) eine Umwälzpumpe antreibt, die bei ausgeschalteter Kranfunktion das Hydrauliköl durch einen, den Leitungen (52, 53) zugeordneten Kühler (14) leitet.

15. Fahrzeugkran nach einem oder mehreren der vorhergehenden Ansprüche, **dadurch gekennzeichnet, dass** das der Betrieb des Zusatzaggregats (10) durch eine externe Energiequelle erfolgt.

16. Fahrzeugkran nach Anspruch 15, **dadurch gekennzeichnet, dass** die externe Energiequelle Strom aus einem Energieversorgungsnetz ist.

17. Fahrzeugkran nach einem oder mehreren der vorhergehenden Ansprüche, **dadurch gekennzeichnet, dass** das Nebenaggregat (10) einen Hydraulikspeicher zum Anlassen des Antriebsmotors (6) mittels eines hydraulischen Anlassers auflädt.

18. Fahrzeugkran nach Anspruch einem oder mehreren der vorhergehenden Ansprüche 1 bis 16, **dadurch gekennzeichnet, dass** das Nebenaggregat (10) einen hydraulischen Anlasser zum Anlassen des Antriebsmotors (6) direkt antreibt.

19. Fahrzeugkran nach Anspruch einem oder mehreren der vorhergehenden Ansprüche 1 bis 16, **dadurch gekennzeichnet, dass** das Nebenaggregat (10) eine Hydraulikpumpe (18) antreibt, die einen hydraulischen Anlasser zum Antreiben des Antriebsmotors (6) antreibt.

20. Fahrzeugkran nach einem oder mehreren der vorhergehenden Ansprüche, **dadurch gekennzeichnet, dass** das Zusatzaggregat (10) auch dann Funktionen übernimmt, wenn der Antriebsmotor (6) läuft.
